# EUROPEAN PATENT APPLICATION

(11) **EP 1 395 028 A1**
(43) Date of publication of application: **03.03.2004**
(21) Application number: 02019248.0
(22) Date of filing: 27.08.2002
(51) Int. Cl.: H04M 7/00, H04Q 3/00, H04M 3/493, H04M 3/54

(54) **Website controlled setting up of a telephone calls**

(71) Applicant: Web. De AG, 76227 Karlsruhe (DE)
(72) Inventor: Cotte, Pierre-Alain, D-92224 Amberg (DE)
(74) Representative: Schnekenbühl, Robert Matthias L.

(57) **Abstract**

A method for communications management, comprising the steps of communicating from a first end user unit data indicating a second end user unit and routing the data indicating the second end user unit to a telecommunications web site associated to the second end user unit.

## Description

### Field of the invention

In general, the present invention relates to communications links between end user units in a communications environment. Particularly, the present invention relates to the management of communications link between end user units by means of a so-called telecommunications web site.

### Background of the invention

Communications environments such as PSTN based, ISDN, cellular etc. networks provide so-called "call-forwarding" services. Call-forwarding services enable a user to define that communications links, for example telephone calls, which are originally intended for an end user device chosen by a "calling" end user device, are directed to a different end user device. As a result, the "calling" end user device will be connected to an end user device being different from the end user device the "calling" end user device has called.

Such services are usually restricted to the communications environment of the provider of such a service. Call-forwarding between different communications environments is generally not possible.

Further, capabilities of call-forwarding services heavily depend on the infrastructure of the used communications environment and, thus, can not be easily adapted.

Further, due to the dependence on the communications environment infrastructure call-forwarding services are usually only provided by communications environments operators and providers or at least partially controlled thereby.

### Object of the invention

In general, the object underlying the present invention is to improve the management of communications links in a communications environment with respect to re-directing/routing/forwarding of communications links. In particular, the present invention should provide for solutions making such communications link management more flexible, user-friendly, adaptable to different communications environments and reducing the dependence on communications environment network structures and constraints and limitations imposed by communications environment service providers and operators.

### Short description of the invention

The above object is solved by a method for communications management wherein, originating from a first end user unit, data indicating a second end user unit are communicated. Such data can be, for example, a telephone number, an URL, an Internet address and the like. For communicating the data indicating the second end user unit such data can be transferred within a communications network such as a PSTN based or mobile cellular telephone network, a computer based network, the Internet etc. by means of wired, wireless, optical, infrared, digital, analog etc. communications links.

Independently of the type of data used for indicating or characterizing the second end user unit and the manner these data are communicated, the data indicating the second end user unit are routed to a telecommunications web site which is uniquely associated to the second end user unit.

Management of communications between end user units and, in particular, management of communications links between end user units in a communications environment are accomplished on the basis of data which are communicated or transferred from a "calling" end user unit to a "called" end user unit and which indicate or characterize the called end user unit.

In a general, two approaches are implemented in communications environments:

According to one approach, data indicating a called end user device and data and/ or information to be communicated between the calling end user device and the called end user device are connected, for example in a common data stream or communications channel. The latter data and/or information represent content data/information such as voice data, video data, alphanumerical data etc.

According to the other approach, data indicating a called end user device and content data and/or information to be communicated between the calling end user device and the called end user device are separated, for example in separated data streams or channels.

For re-directing communications links to be established to a called end user unit as defined by a calling end user unit requires that the end user unit to be called or its user, respectively, defines a different end user unit to which incoming communications links are to be re-directed. For carrying out a re-directing of incoming communications links it is necessary to obtain information characterizing the end user unit with which the calling end user unit is intended to communicate. Such information can be compared to the above data indicating the second end user unit.

In the above first approach, data indicating a second end user unit can be obtained as separate data. But for actually re-directing or routing a communications link originating from the first end user unit, here it is not possible to use only the data indicating the second end user device and to re-direct an associated communications link. Rather, an actual re-directing of a communications link to a different end user unit instead of the second end user unit requires an establishment of a communications link to a unit responsible for the re-directing, here the telecommunications web site. As a result, such a re-directing of communications links will usually result in communications link costs due to the establishment of a communications link to another telecommunications web site.

In contrast thereto, according to the above second approach a re-directing of communications links does not require an establishment of a communications link to the telecommunications web site since the data indicating the second end user unit and content data/information intended to be communicated thereto are separated and, thus, can be used separately.

Examples of the above first approach include a so-called "call forwarding" in ISDN telephone networks utilizing the SS7-ISUP protocol. According to the SS7-ISUP protocol, signaling which can be compared to be above data indicating the second end user device and a content channel (e.g. voice channel) associated thereto are inseparably connected. As a result, re-directing/routing/forwarding the signaling will also result in an establishment of the associated content channel.

An example for the above second approach includes so-called intelligent networks (IN) utilizing the SS7-INAP protocol. According to the SS7-INAP protocol, routing information comparable to the above data indicating the second end user unit are clearly separated from content data and/or information to be communicated such as voice data.

The method according to the present invention enables the telecommunications web site to perform a re-directing/routing/forwarding of communications links in both cases as will be described below.

End user units as used herein relate to any device, unit or means, which can be used for communications. A preferred end user unit is a telephone, a keyboard, a computer terminal, a mobile phone, a fax, a telex, a mail pigeon, an ordinary letter, a scanner, a PSTN device, a 3G-wireless communications device, especially a UMTS device, etc.

The end user unit of the present invention is not limited to a particular communications environment/network/unit/device/means. Rather, communications by means of an end user unit can occur via any communications environment including, for example, a regular telephone networks, mobile communications networks, computer networks, radio transmission networks, the Internet, etc. Further, an end user unit is not restricted to single units, devices or means, but can also include two and more units, devices, means and the like providing data/information sending and/or receiving capabilities for communications purposes.

The end user unit is adapted to perform network based communications. Thus, the end user unit is connectable to a network or rather able to communicate with a network. A network in this context is a physical transport medium in which data and/or signals can be transmitted. For example, an ordinary letter itself is adapted to perform network based communication when scanned or digitized and supplied into a TCP/IP network.

A communications environment is a communications system comprising more than one component. Thus, a communications environment might for instance comprise a telephone, a PSTN-network, a gateway to the internet, etc.

The terms "web site" and "web page" as used herein refer to sites and sub-sites associated thereto which can be uniquely addressed by means of a single address, like a telephone number or an IP address, an URL, etc. It is also advantageous to use such a "web site" in a 3G-communication environment, especially an UMTS-environment. Preferably, such a web site is a site known from the Internet with a specific URL, which can be accessed by Internet visitors, and by the web site host. The web site host is the owner of the web site.

This web site can include one or more web pages. These web pages are part of the one web site. It should be noted that the terms "web site" and "web page" are not to be considered to limit the present invention to conventional web sites and webpages known from the Internet. Thus, the web site and its web page(s), respectively, can be accessed by establishing a communications link from an end user unit independently of the communications environment(s) employed.

In particular a telecommunications web site is adapted to provide, upon an access by an end user unit, for direct private communications between the accessing end user unit and an end user unit to which a communications link is to be established.

A telecommunications web site is assigned to or personalized for or corresponding to a specific person or entity. Such a specific entity can be a person, a company or any other entity. Preferably, the specific entity is a single entity, e.g., a specific user or owner (e.g., a single person, a company, a unit of a company, etc.) of the telecommunications web site, a specific address, a specific location, a specific end user unit and the like. Thus, an end user unit of a user to whom a telecommunications web site is associated to will be also associated with that telecommunications web site if used for accessing the same. Therefore, the specific entity to which a telecommunications web site is associated to and an end user unit employed by the specific entity can be considered as synonym for the period of time the specific entity operates its end user unit to access its telecommunications web site.

A telecommunications web site serves as a general purpose communications interface for end user units and addressed entities which can include or can be an end user unit itself. As an illustration, the telecommunications web site can be considered as a communications "window", similar to a window of an office counter, where communicating parties are "sitting" on opposite sides of the window and can communicate through speech holes in the window, via an intercom, by gestures, by facial expressions, showing papers with information written thereon, passing documents through a hatch and so on. Comparable thereto, the telecommunications web site according to the present invention allows communications in a plurality of modes and by a plurality of types/formats of data/information.

An advantage of the TCW is that communications can be provided and established multimedial, i.e. using more than one medium. These different media can be used by using different end user units or different networks like for instance PSTN, IP-based networks or UMTS networks.

For communicating the data indicating the second end user unit it is possible to transmit these data directly to the telecommunications web site or to a first switching unit. Examples of a switching unit include PSTN switchboards for analog and/or digital telephone links, network routers, network nodes, radio base stations for a cellular telephone network, satellite based relay units, transceivers, etc.

In the latter case, the data indicating the second end user unit are transmitted from the first switching unit to the telecommunications web site.

Preferably, the data indicating the second end user unit are stored by means of the telecommunications web site, for example in a memory associated thereto. This enables the second end user unit to access the stored data indicating the second end user unit for later use and retrieval in order to, for example, to be informed that the first end user unit tried to establish a communications link to the second end user unit. As will be explained below, the stored data indicating the second end user unit can also be used for establishing a communications link as intended by the first end user unit but under control of the telecommunications web site.

For routing or re-directing the data indicating the second end user unit to the telecommunications web site instead of the second end user unit, routing constraints can be defined, preferably by means of the second end user unit.

In case of a communications environment utilizing the above first approach, for routing or re-directing of the communications link intended by the first end user unit to an end user unit being different from the second end user unit, a communications link from the first end user unit is established via the telecommunications web site to a third end user unit. The third end user unit represents an end user unit to which the intended communications link is to be directed instead of the second end user unit. Preferably, the third end user unit is selected by the second end user unit, for example by providing respective data/information to the telecommunications web site.

Due to the establishment of the communications link from the first end user unit to the telecommunications web site and, in particular if this communications link is established via the first switching unit, communications link costs can occur. Depending on the accounting method employed in a communications environment wherein the method according to the present invention is carried out, such communications link costs can be charged to the first end user unit, to the telecommunications web site, the second end user unit or the third end user unit.

For example, depending on the type of the third end user unit, its communications environment and the like, it is possible that the telecommunications web site establishes the communications link to the third end user unit via a second switching unit.

A possibility to avoid the above routing related additional communications link costs is to obtain data indicating the first end user unit by means of the telecommunications web site. On the basis of such data, the telecommunications web site can establish a communications link to the first end user unit. As a result, the communications link between the first end user unit and the telecommunications web site is not a communications link from the first end user unit re-directed or routed via the telecommunications web site. Rather this communications link can be compared to a conventional communications link usually not resulting in communications link costs related to a re-directing or routing service. Further, the telecommunications web sites establishes a communications link to a third end user unit. As above, the third end user unit which can be selected by the second end user unit represents an end user unit to which a communications link originally intended for the second end user unit is to be forwarded. In order to actually establish a communications link between the first and the second end user units, the telecommunications web site connects the communications links to the first end user unit and the third end user unit.

In a case, the first end user unit connects to the telecommunications web site via the first switching unit, the data characterizing the first end user unit can be obtained via the first switching unit. Then, it is possible to establish both the communications link to the first end user unit and the communications link to the third end user unit via the first switching unit.

With or without using a first switching unit, the communications links to the first and third end user units can be established via a second switching unit.

Preferably, the re-directing or routing of the communications link intended by the first end user unit to the third end user unit includes a replacement of the data indicating the second end user unit by data indicating the third end user unit. This can be accomplished under control of the telecommunications web site. Then, the communications link to the third end user unit will be established on the basis of the data indicating the third end user unit.

In order to provide for a re-directing/routing/forwarding of a communications link from the first end user unit to a third end user unit instead of the second end user unit according to the above second approach, the telecommunications web site communicates data indicating a third end user to a switching unit. Comparable to above described embodiments, the third end user unit represents an end user unit to which communications links are routed instead of the second end user unit as originally intended by the first end user unit. Preferably, the definition of the third end user unit and the provision of respective data are performed under control of the second end user unit. For examples of the switching unit it is referred to the above given examples.

Further, the data indicating the second end user unit are communicated from the first end user unit to the switching unit. This communication can be performed at the same time or subsequently to the routing of the data indicating the third end user unit to the telecommunications web site. Moreover, communicating of the data indicating the third end user unit from the telecommunications web site to the switching unit can be performed before the data indicating the second end user unit are routed to the telecommunications web site or in response to the routing of the data indicating the second end user unit.

Then, the data indicating the second end user unit are replaced by means of the switching unit by the data indicating the third end user unit such that the communications link originally intended to the second end user unit will be established to the third end user unit.

The latter described method according to the present invention is possible due to the fact that, according to the above second approach, data indicating the second end user unit, for example in form of signaling, is separated from content data and/or information from the first end user unit.

In order to provide for a re-directing/routing/forwarding of communications links in view of the above second approach utilizing separated data characterizing an end user unit to which a communications link is intended by a calling end user unit, the present invention provides an alternative method for communications management for communications links with a first end user unit. Again, a telecommunications web site associated with a second end user unit communicates data indicating a third end user unit to a switching unit. Descriptions given above with respect to third end user units and switching units also apply here. In contrast to the above described methods, here data indicating a second end user unit are not routed to the telecommunications web site. Rather, the first end user unit communicates data indicating the second end user unit to the switching unit. Again, it is possible that the communicating of the data indicating the third end user unit can be carried out before or in response to the communicating of the data indicating the second end user unit by the first end user unit.

Then, by means of the switching unit, the data indicating the second end user unit are replaced by the data indicating the third end user unit. As a result, a communications link originally intended for the second end user unit will be established with the third end user unit. In view of the principles underlying the above second approach, it might be necessary that communications links are established from the switching unit to the first end user unit and to the third end user unit and that these communications links are connected to actually provide for a communications link between the first and third end user units.

For communicating the data indicating the third end user unit, it is possible that the telecommunications web site communicates such data to a so-called communications control unit. The communications control unit can be, for example, a service control point SCP in an intelligent network utilizing the SS7-INAP protocol. The communications control unit controls communications links between end user units. The received data are communicated from the communications control unit to the switching unit so as to instruct the switching unit to re-direct/route/forward communications links originally intended to the second end user unit to the third end user unit. Preferably, the communications control unit is capable of controlling the switching unit to replace the data indicating the second end user unit upon the receipt thereof by the data indicating the third end user unit.

In case the method according to the present invention is utilized in a communications environment wherein communications control units are controlled by communications management units, the data indicating the third end user unit are communicated from the telecommunications web site to such a communications management unit. Examples of a communications management unit include a so-called service management point SMP in an intelligent network utilizing the SS7-INAP protocol. The received data are communicated by the communications management unit to a communications control unit examples of which are given above. Subsequently, the data indicating the third end user unit are communicated by means of the communications control unit to the switching unit to instruct the same that communications links intended for the second end user unit are re-directed/routed/forwarded to the third end user unit. Preferably, the communications control unit is capable of controlling the replacing of the data indicting the second end user unit by the data indicating the third end user unit carried out by the switching unit. Preferably, the communicating of the data indicating the third end user unit from the telecommunications web site to the switching unit are communicated in real-time in response to the communication of the data indicating the second end user unit. This applies to a communication of the data indicating the second end user unit to the telecommunications web site and/or to the switching unit. Further, this real-time communication is also preferred with respect to communications from the telecommunications web site to a communications control unit and from the communications control unit to a communications management unit and therefrom to a communications control unit.

Further, the present invention provides, to solve the above object, a telecommunications site, a telecommunications control unit, a communications management unit and a software program product as defined in further independent claims.

### Short description of the figures

In the following description of preferred embodiments of the present invention, it is referred to the accompanying drawings, wherein:
- Fig. 1: is an illustration of a first embodiment of the present invention,
- Fig. 2: is an illustration of a second embodiment of the present invention,
- Fig. 3: is an illustration of a third embodiment of the present invention,
- Fig. 4: is an illustration of a fourth embodiment of the present invention, and
- Fig. 5: is an illustration of a fifth embodiment of the present invention.

### Description of preferred embodiments

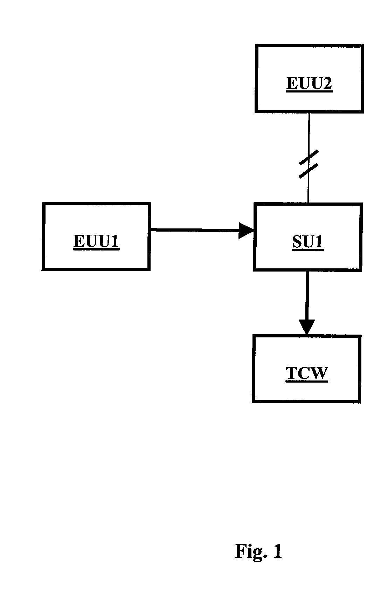

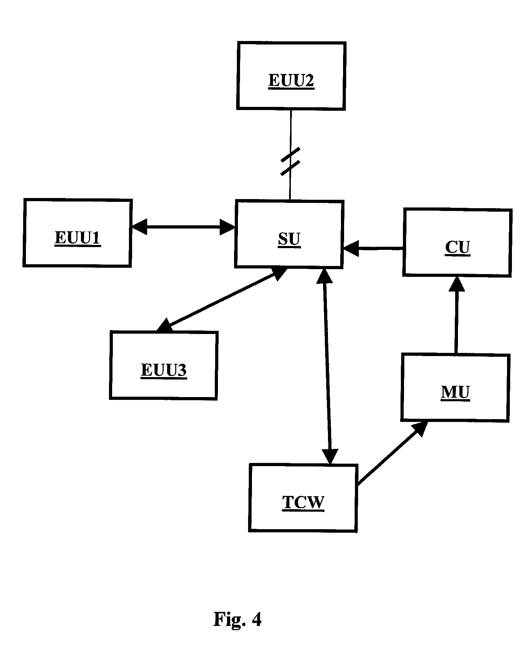

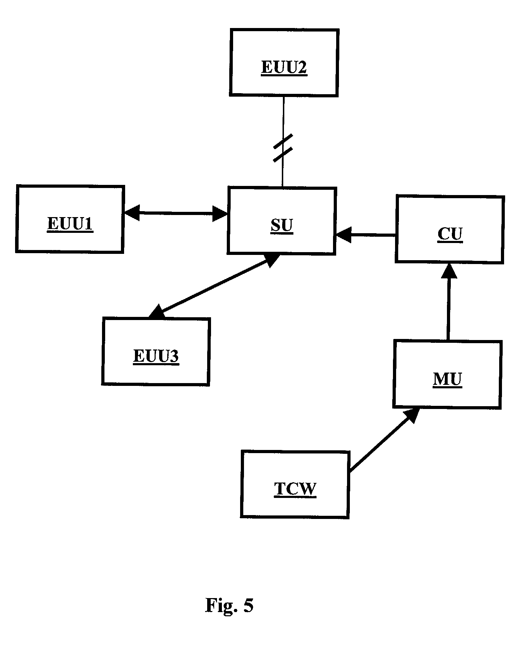

In the following, preferred embodiments are described in view of a telephone network as communications environment utilizing the SS7-ISUP protocol (see embodiments of Fig. 1, 2 and 3) or the SS7-INAP protocol (see embodiments of Fig. 4 and 5). For the sake of simplicity, in the following, end user units are considered to be telephones, switching units are considered to be switchboards, communications control units are considered to be service control points SCPs and communications management units are considered to be service management points SMPs.

For the embodiments illustrated in Fig. 1, 2 and 3, a standard call-forwarding service is employed. Thus, (local) switching units of a used communications environment can be controlled such that, for all end user units (e.g. telephone) a communications link (e.g. telephone call) directed thereto is forwarded to a different end user unit. This can be possible for analog and/or digital communications environments and end user units.

For installing a call-forwarding service, a user of an end user unit transmits data characterizing a different end user unit to which communications links are to be forwarded to a respective switching unit. This can be accomplished by means of the end user unit for which the call-forwarding service is requested or by means of a different unit such as a personal computer or a different telephone.

According to the SS7-ISUP protocol, signaling and associated content data/information are inseparably connected. Thus, data characterizing an end user unit to be called and content data/information are transmitted in combination. While a transmission of signaling is usually not connected with communications link costs for the participating end user units, the transmission of content data and/or information such as voice data will be performed via a communications link for which costs occur. Therefore, call-forwarding in view of the SS7-ISUP protocol will lead to communications link costs in addition to conventional communications link. In order to overcome such problems of the SS7-ISUP protocol and to provide for a basic communications link management, the embodiment shown in Fig. 1 can be implemented. This embodiment provides for a communications link management in form of a monitoring of communications links intended for a receiving end user unit.

For the example shown in Fig. 1, a first end user unit EUU1 represents a calling end user unit, while a second end user unit EUU2 represents an end user unit to which the first end user unit EUU1 wants to be connected to. In case of a telephone network, the first end user unit EUU1 transmits a telephone number of the second end user unit EUU2 to indicate a desired telephone connection thereto.

In order to provide for a management of communications links in form of a monitoring thereof, for example, in case of an absence of a user of the second end user unit EUU2, the second end user unit EUU2 or its user, respectively, has defined a re-directing/ routing/forwarding to a telecommunications web site the second end user unit EUU2 is associated with.

For such a re-directing of incoming communications links, a switching unit SU1 is instructed to forward all incoming communications links or incoming requests to establish a communications link with the second end user unit EUU2 to the telecommunications web site TCW.

Upon receipt of data indicating the second end user unit EUU2, the switching unit SU1 routes such data from the first end user unit EUU1 to the telecommunications web site TCW. In view of the SS7-ISUP protocol data characterizing the second end user unit EUU2 and content data and/or information are forwarded to the telecommunications web site TCW. In order to avoid communications link costs, the telecommunications web site TCW just obtains the data characterizing the second end user unit EUU2 but refuses an actual establishment of a communications link, i.e. here a telephone connection, to the first end user unit EUU1. This can be accomplished by the telecommunications web site TCW by means of measures comparable to a user of a conventional telephone refusing an incoming telephone call by not picking up the handset of the telephone.

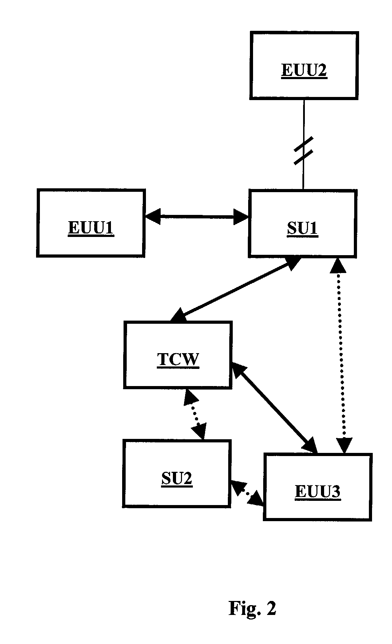

A more enhanced embodiment will be described with reference to Fig. 2. Here, a forwarding of a communications link originally intended for the second end user device EUU2 is to be actually carried out. In the illustrated example, the communications link forwarding is defined to provide for communications links to a third end user unit EUU3 instead of the second end user unit EUU2.

As with the embodiment shown in Fig. 1, the first end user unit EUU1 communicates data characterizing the second end user unit EUU2 and, due to the SS7-ISUP associated therewith, content data and/or information to the switching unit SU1. The switching unit SU1 being provided with the information that communications to the second end user unit EUU2 are to be directed to the telecommunications web site TCW routes the data and/or information received from the first end user unit EUU1 to the telecommunications web site TCW.

In contrast to know call-forwarding services which would be completely accomplished by the switching unit, the communications link routing to the third end user unit EUU3 is here controlled by the telecommunications web site TCW. For that purpose, the second end user unit EUU2 has accessed its telecommunications web site TCW and instructed the same that communications links have to be routed to the third end user unit EUU3.

Upon receipt of data and/or information from the switching unit SU1, the telecommunications web site TCW accepts the communications link ("picks up its handset"). As a result, a communications link between the first end user unit EUU1 and the telecommunications web site TCW is established. On the basis of the routing information or constraints with respect to communications links originally directed to the second end user unit EUU2, the telecommunications web site TCW establishes a communications link to the third end user unit EUU3. As indicated by the dotted lines in Fig. 2, communications links to the third end user unit EUU3 are possible by a direct link between the telecommunications web site TCW and the third end user unit EUU3, via a further switching unit SU2, via the above first switching unit SU1 and the like.

This embodiment allows for a user-friendly, enhanced communications links management which is not restricted to specific communications environments and is independent from a service provider or operator of the communications environment including the first switching unit SU1 due to the use of the telecommunications web site TCW. In contrast to the embodiment described with respect to Fig. 1 this embodiment provides a communications link management in the form of routing of communications links.

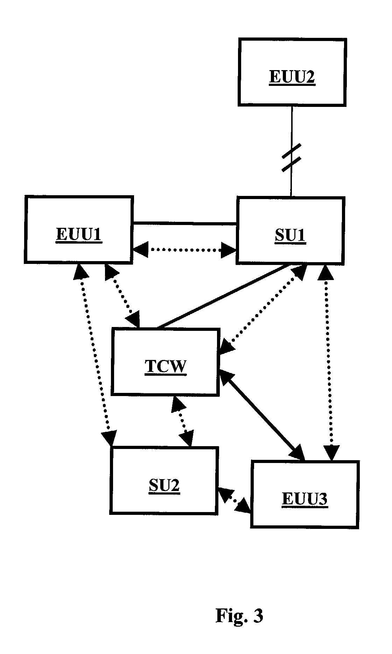

The embodiment illustrated in Fig. 3 provides the advantage of the embodiment of Fig. 1 to avoid unnecessary communications link costs and the advantage of the embodiment of Fig. 2 of actually forwarding incoming communications links. As with the embodiment illustrated in Fig. 1, the telecommunications web site TCW in the embodiment of Fig. 3 obtains the data characterizing the second end user unit EUU2 but does not establish a communications link via the switching unit SU1 to the first end user unit EUU1. Thus, additional communications link costs usually connected with a call-forwarding service are avoided.

In order to provide for an actual communications link between the first end user unit EUU1 and the third end user unit EUU3, the telecommunications web site establishes a communications link to the first end user unit EUU1 and a communications link to the third end user unit EUU3. Then, these communications links are connected by means of the telecommunications web site TCW. Advantageously, the establishment of these communications links and its connection is performed such that the first end third end user units EUU1, EUU3 are connected comparable to a conventional call-forwarding or conventional direct call.

As illustrated in Fig. 3 by means of the dotted lines, communications links from the telecommunications web site TCW to the first and the third end user units EUU1, EUU3 can be accomplished via the switching unit SU1, a further switching unit SU2, directly between the telecommunications web site and the first and third end user units and combinations thereof.

For communications environments utilizing data for characterizing "called" end user units being separate from content data and/or information, for example communications environments utilizing the SS7-INUP protocol, the embodiments shown in Fig. 4 and 5 are preferred.

In so-called intelligent networks utilizing the SS7-INAP protocol communications control units referred to as service center points SPCs control the routing of communications links.

Such communications control units receive the separate data characterizing a "called" end user unit from a (local) switching unit. On the basis of such characterizing data, the communications control units determine whether a call-forwarding for the respective end user unit is requested. If this is the case, communications control units route the communications link originally intended for an end user unit to a different end user unit.

For controlling such a communications control unit, a communications management unit can be used which can be a service management point SMP according to the SS7-INAP protocol. Such communications management units are used for providing information concerning a requested communications links routings and the like to communications control unit. Usually communications and/or transmission links between communications management units and communications control units do not provide for a real-time transmission, but are nevertheless possible.

Fig. 4 illustrates an embodiment wherein a first end user unit EUU1 tries to establish a communications link with a second end user unit EUU2. But the second end user unit EUU2 or its user, respectively, has defined that incoming communications links intended for the second end user unit EUU2 are to be routed to a third end user unit EUU3.

A telecommunications web site TCW associated to the second end user unit EUU2 is informed about this routing request by a respective access by the second end user unit EUU2 or its user, respectively, as authorized entity. For initiating the desired routing to the third end user unit EUU3, a switching unit SU via which the first end user unit EUU1 wants to establish a communications link must be informed of the routing request. For that purpose, the telecommunications web site TCW informs a communications management unit MU of the requested routing to the third end user unit EUU3. The communications management unit MU communicates that request to a communications control unit CU which, in turn, instructs the switching unit SU accordingly.

Assuming that communications possibilities between the communications management unit MU and the communications control unit CU do not provide for a real-time communication, it is advantageous that the routing request is provided from the telecommunications web site TCW early enough so that incoming communications links into the second end user unit EUU2 are routed to the third end user unit EUU3 with virtually no time delay. Thus, in this case the requested information from the telecommunications web site TCW is communicated to the communications management unit MU before a communications link to the second end user unit EUU2 is requested.

Nevertheless, even if no real-time communications between the communications management unit MU and the communications control unit CU is possible, the routing request information can be communicated from the telecommunications web site TCW to the communications management unit MU in response to an incoming communications link from the first end user unit EUU1 if transmissions between the communications management unit MU and the communications control unit CU are fast enough. Transmission delays between the communications control unit and the switching unit are virtually not existing due to the usually used real-time links there between.

In case, communications from the telecommunications web site TCW via the communications management unit MU and the communications control unit CU to the switching unit and vice versa can be accomplished in real-time, it is contemplated that the telecommunications web site communicates the routing request in response to the data characterizing the second end user unit EUU2 communicated from the first end user unit EUU1. Here, the switching unit SU communicates these data to the telecommunications web site TCW which, in turn, communicates the routing request to the switching unit SU as described above.

Since the switching unit SU knows that communications links to the second end user unit EUU2 are to be routed to the third end user unit EUU3, the illustrated attempt of the first end user unit EUU1 to connect to the second end user unit EUU2 will result in a communications link between the first end user unit EUU1 and the third end user unit EUU3 via the switching unit SU.

In contrast to the embodiment shown in Fig. 4, Fig. 5 illustrates an embodiment wherein the telecommunications web site TCW is not in direct communication with the switching unit SU. As with the embodiment illustrated in Fig. 4, the telecommunications web site TCW is provided with information concerning the routing request to the third end user unit EUU3. This request is transmitted via the communications management unit MU and the communications control unit to the switching unit.

Again, it is possible that the communication of the request from the telecommunications web site TCW to the switching unit SU can be performed in advance or in response to the first end user unit EUU1 trying to establish a communications link to the end user unit EUU3. For a transmission of the routing request in advance, the telecommunications web site transmits respective information to the communications management unit MU, preferably, upon receipt of the routing request from the second end user unit.

In case, the telecommunications web site TCW will provide the routing request information to the switching unit SU in response to the request by the first end user unit EUU1 for a communications link to the second end user unit EUU2, the telecommunications web site TCW has to be informed thereof. This can be accomplished via the second end user unit EUU2. Here, the second end user unit EUU2 is provided with information indicating that the first end user unit EUU1 attempts to establish a communications link with the second end user unit. The second end user unit EUU2 just accepts the data from the first end user unit characterizing the second end user unit EUU2. Upon receipt of these data, the second end user unit informs the telecommunications web site TCW, for example, via the internet, a SMS, a telephone call, etc. of the communications link requested by the end user unit. Then, the telecommunications web site TCW advises via the communications management unit MU and the communications control unit CU the switching unit to route the communications link originating from the first end user unit EUU1 to the third end user unit EUU3.

Depending on the used communications environment for carrying out the embodiments of Fig. 4 and 5, it might be necessary for actually connecting the first and third end user units EUU1, EUU3, that the switching unit SU will receive the data characterizing the second end user unit EUU2 but no actual communications link between the first end user unit EUU1 and the switching unit SU is established. In such a case, comparable to the communications link to the third end user unit EUU3, the switching unit SU established a communications link to the first end user unit EUU1 and connects these communications links to result in a communications link between the first and the third end user units.

Further, it is possible that the embodiments illustrated in Fig. 4 and 5 are implemented such that a re-routing of communications links is possible. For the illustrated examples, such a re-routing would result in an establishment of a communications link to the originally called second end user unit EUU2, for example via the third end user unit EUU3, a further switching unit (not shown), the telecommunications web site or via the switching unit SU. Re-routing to the second end user unit EUU2 via the switching unit SU can be, for example, accomplished by overruling the requested routing by means of the telecommunications web site TCW.

## Claims

1. A method for communications management, comprising the steps of:
- communicating from a first end user unit (EUU1) data indicating a second end user unit (EUU2), and
- routing the data indicating the second end user unit (EUU2) to a telecommunications web site (TCW) associated to the second end user unit (EUU2).

2. The method of claim 1, comprising the step of:
- storing the data indicating the second end user unit (EUU2) by means of the telecommunications web site (TCW).

3. The method of claim 1 or 2, comprising the step of:
- defining routing constraints for the routing of the data indicating the second end user unit (EUU2) to the telecommunications web site (TCW) by means of the second end user unit (EUU2).

4. The method of one of the preceding claims, comprising the steps of:
- communicating the data indicating the second end user unit (EUU2) from the first end user unit (EUU1) to a first switching unit (SU1), and
- communicating the data indicating the second end user unit (EUU2) from the first switching unit (SU1) to the telecommunications web site (TCW).

5. The method of one of the preceding claims, comprising the step of:
- establishing a communications link from the first end user unit (EUU1) via the telecommunications web site (TCW) to a third end user unit (EUU3), the third end user unit (EUU3) being selected by the second end user unit (EUU2) as end user unit to which communications links are to be forwarded.

6. The method of claim 5 as far as depending from claim 2, comprising the step of:
- establishing the communications link from the first end user unit (EUU1) via the first switching unit (SU1) to the third end user unit (EUU3).

7. The method of claim 6, comprising the step of:
- establishing the communications link to the third end user unit (EUU3) via a second switching unit (SU2) under control of the telecommunications web site (TCW).

8. The method of one of the claims 1 to 4, comprising the steps of:
- obtaining data indicating the first end user unit (EUU1) by means of the telecommunications web site (TCW),
- establishing a communications link to the first end user unit (EUU1) under control of the telecommunications web site (TCW),
- establishing a communications link to a third end user unit (EUU3) under control of the telecommunications web site (TCW), the third end user unit (EUU3) being selected by the second end user unit (EUU2) as end user unit to which communications links are to be forwarded, and
- connecting under control of the telecommunications web site (TCW) the communications link to the first end user unit (EUU1) and the communications link to the third end user unit (EUU3) so as to establish a communications link between the first end user unit (EUU1) and the third end user unit (EUU3).

9. The method of claim 8 as far as depending from claim 2, comprising the steps of:
- obtaining the data characterizing the first end user unit (EUU1) via the first switching unit (SU1),
- establishing the communications link to the first end user unit (EUU1) via the first switching unit (SU1), and
- establishing the communications link to the third end user unit (EUU3) via the first switching unit (SU1) so as to establish the communications link between the first end user unit (EUU1) and the third end user unit (EUU3) via the first switching unit (SU1).

10. The method of claim 8 or 9, comprising the steps of:
- establishing the communications link to the first end user unit (EUU1) via a second switching unit (SU2), and
- establishing the communications link to the third end user unit (EUU3) via the second switching unit (SU2), so as to establish the communications link between the first end user unit (EUU1) and the third end user unit (EUU3) via the second switching unit (SU2).

11. The method of one of the claims 4 to 10, comprising the steps of:
- replacing the data indicating the second end user unit (EUU2) by data indicating the third end user unit (EUU3), and
- establishing the communications link to the third end user unit (EUU3) using the data indicating the third end user unit (EUU3).

12. The method of one of the claims 1 to 3, comprising the steps of:
- communicating, from of the telecommunications web site (TCW) to a switching unit (SU), data indicating a third end user unit (EUU3), the third end user unit (EUU3) being an end user unit to which communications links intended for the second end user unit (EUU2) are to be routed,
- communicating from data indicating a second end user unit (EUU2) from the first end user unit (EUU1) to the switching unit (SU), and
- replacing the data indicating the second end user unit (EUU2) by the indicating the third end user unit (EUU3) by means of the switching unit (SU) so as to establish a communications link from the switching unit (SU) to the third end user unit (EUU3).

13. A method for communications management for communications links with a first end user unit (EUU1), comprising the steps of:
- communicating, from of a telecommunications web site (TCW) associated to a second end user unit (EUU2) to a switching unit (SU), data indicating a third end user unit (EUU3), the third end user unit (EUU3) being an end user unit to which communications links intended for the second end user unit (EUU2) are to be routed,
- communicating data indicating the second end user unit (EUU2) from the first end user unit (EUU1) to the switching unit (SU), and
- replacing the data indicating the second end user unit (EUU2) by the data indicating the third end user unit (EUU3) by means of the switching unit (SU) so as to establish a communications link from the switching unit (SU) to the third end user unit (EUU3).

14. The method of claim 12 or 13 , comprising the step of:
- communicating the data indicating the third end user unit (EUU3) to the switching unit (SU) before communicating the data indicating the second end user unit (EUU2) by the first end user unit (EUU1), or
- communicating the data indicating the third end user unit (EUU3) to the switching unit (SU) in response to the communicating the data indicating the second end user unit (EUU2) by the first end user unit (EUU1).

15. The method of one of the claims 12 to 14, comprising the steps of:
- establishing a communications link from the switching unit (SU) to the first end user unit (EUU1)
- establishing a communications link from the switching unit (SU) to the third end user unit (EUU3), and
- connecting under control of the switching unit (SU) the communications link from the switching unit (SU) to the first end user unit (EUU1) and the communications link from the switching unit (SU) to the third end user unit (EUU3) to establish a communications link between the first end user unit (EUU1) and the third end user unit (EUU3).

16. The method of one of the claims 12 to 15, comprising the step of:
- communicating the data indicating the third end user unit (EUU3) from the telecommunications web site (TCW) to a communications control unit (CU), the communications control unit (CU) for controlling communications links between end user units, and
- communicating the data indicating the third end user unit (EUU3) from the communications control unit (CU) to the switching unit (SU) so as to control the replacing of the data indicating the second end user unit (EUU2) upon receipt thereof by the data indicating the third end user unit (EUU3).

17. The method of one of the claims 12 to 15, comprising the steps of:
- communicating the data indicating the third end user unit (EUU3) from the telecommunications web site (TCW) to a communications management unit (MU),
- communicating the data indicating the third end user unit (EUU3) from the communications management unit (MU) to a communications control unit (CU),
- the communications management unit (MU) for controlling the communications control unit (CU),
- the communications control unit (CU) for controlling communications links between end user units in line with the control of the communications management unit (MU), and
- communicating the data indicating the third end user unit (EUU3) from the communications control unit (CU) to the switching unit (SU) so as to control the replacing of the data indicating the second end user unit (EUU2) upon receipt thereof by the data indicating the third end user unit (EUU3).

18. The method of one of the claims to 12 to 17, comprising the step of:
- communicating the data indicating the third end user unit (EUU3) from the telecommunications web site (TCW) to the switching unit (SU) in real time.

19. A telecommunications web site (TCW), being
adapted to be operated according to the steps of one of the claims 1 to 18 as far as relating to a telecommunications web site (TCW).

20. A communications control unit (CU), being
adapted to be operated according to the steps of one of the claims 1 to 18 as far as relating to a communications control unit (CU).

21. A communications management unit (MU), being
adapted to be operated according to the steps of one of the claims 1 to 18 as far as relating to a communications management unit (MU).

22. A software program product, comprising
program code portions for carrying out the steps of one of the claims 1 to 18.

23. The software program product of claim 22, being
stored on a computer readable storage medium or stored in a storage device for a computer.
